# EUROPÄISCHE PATENTSCHRIFT

(11) **EP 2 128 554 B1**
(45) Veröffentlichungstag und Bekanntmachung des Hinweises auf die Patenterteilung: **30.04.2014**
(21) Anmeldenummer: 09006772.9
(22) Anmeldetag: 20.05.2009
(51) Int. Cl.: H04N 5/232, H04N 5/235, F41G 3/00, H04N 5/33

(54) **Verfahren zur automatisierten Lagenachregelung der Anzeige einer Wärmebildkamera**
Method for automated position readjustment of the display of a heat imaging camera
Procédé de réglage supplémentaire de position automatisé de l'affichage d'une caméra thermique

(30) Priorität: 30.05.2008 DE 102008026027
(43) Veröffentlichungstag der Anmeldung: 02.12.2009
(73) Patentinhaber: MBDA Deutschland GmbH, 86529 Schrobenhausen (DE)
(72) Erfinder: Hiebl, Manfred, 82054 Sauerlach (DE)
(74) Vertreter: Hummel, Adam

(56) Entgegenhaltungen:
- WO-A-2008/018072
- GB-A- 2 182 012
- US-A- 5 107 117

## Beschreibung

Die Erfindung betrifft ein Verfahren zur automatisierten Lagenachregelung der Anzeige einer in einem Fluggerät angeordneten Wärmebildkamera mit Hilfe eines im Fluggerät angeordneten und Signale erzeugenden Kreiselgeräts.

Die Wiedergabe einer Szene durch ein Wärmebildgerät, welches eine automatische Gain- und Offset-Regelung aufweist, beinhaltet das Problem, dass die Darstellung mangelhaft erfolgt, wenn die Temperaturverteilung in der betrachteten Szene einen starken Gradienten aufweist. Dies ist besonders dann der Fall, wenn klare Sicht herrscht und sich große Anteile an wolkenlosem Himmel in der Szene befinden. Im Allgemeinen kann die Temperatur des Himmels im langwelligen Spektralbereich (8 - 12 µm) sehr niedrig werden. Vom Horizont bis zum Zenit nimmt die Temperatur kontinuierlich ab. Ohne den Einfluss der Atmosphäre wären dort Temperaturen in der Nähe des absoluten Temperaturnullpunktes zu messen.

Wärmebildgeräte bekannter Bauart verfügen nicht über eine ausreichende Dynamik, um einen Temperaturbereich von etwa -80 °C bis + 100 °C durchgängig verlustfrei wiedergeben zu können. Dies bedeutet in der Praxis, dass sich umso größere Bereiche der abgebildeten Szene in der unteren Sättigung befinden, je mehr kalter Himmel im Bild wiedergegeben wird. Die untere Sättigungstemperatur ist hierbei die, tiefste Temperatur, die das Wärmebildgerät noch wiederzugeben in der Lage ist. Allgemein gilt jedoch, dass Bildbereiche, die sich im Sättigungsbereich befinden, für eine Bildkorrelation unbrauchbar sind, da dort keine Struktur mehr erkennbar ist. Ein weiterer negativer Effekt besteht darin, dass ein ausgedehnter Bildanteil mit niedriger Temperatur auch den Temperaturoffset einer automatischen Gain- und Offset-Regelung nach unten zieht. Dies wirkt wiederum auf die Verstärkung ein, weshalb sich das analoge Videobild in unerwünschter Weise verändert. Dieser Effekt kann in der militärischen Praxis dazu führen, dass die eigentlich vorhandenen Zielsignaturen verschwinden oder Temperaturdifferenzen auf dem Ziel nicht mehr aufgelöst werden können, weil das Ziel, das eine hohe Temperatur aufweist, vor einem kalten Hintergrund in der oberen Sättigung verschwindet. In diesem Fall ist die eindeutige Identifikation des Zieles nicht mehr möglich.

Im Idealfall soll also erreicht werden, dass im Wärmebildgerät eine optimale Einstellung des Bildes mit hohem Kontrast sowohl auf dem Ziel als auch in der Umgebung des Zieles angezeigt wird. Die automatische Gain- und Offset-Einstellung muss demnach gewährleisten, dass sich das Videobild bezüglich Offset und Gain zumindest so einstellt wie ein Betrachter des Videobildes dies mittels manueller Einstellung erreichen würde. Für die benötigten Rechenverfahren besteht somit die Anforderung, dass eine Unterscheidung zwischen dem kalten Himmel und dem warmen Bereich (z.B. Erde) gegeben sein muss.

Aus der WO 2008/018072 A2 ist Gegenmaßnahmensystem für wärmesichtfähige und wärmesuchende Flugkörper bekannt geworden, welches auch zum Schutz vor Angriffen auf Hubschrauber mittels eines Flugkörpers verwendet werden kann, der mit einem Infrarot-Suchkopf ausgerüstet ist. Dazu weist der zu schützende Hubschrauber wenigstens eine auf seine Umgebung gerichtete IR-Kamera auf, deren Bild mit Hilfe eines Bildprozessors einer Grauwertanalyse unterworfen wird. Das so bearbeitete Bild wird dann auf der gegenüber liegenden Seite des Hubschraubers mittels thermoelektrischer Platten wiedergegeben, wobei das damit auch der Horizont wiedergegeben. Die Lage des Horizonts kann sich dabei je nach Elevationswinkel bis zum oberen Rand oder darüber hinaus bewegen. Dies ist jedoch keine Lösung für die oben genannte Problematik, da in der Mehrzahl der Fälle der Horizont innerhalb des abgebildeten Bereichs liegt.

Es sind mechanische und auch elektronische Kreiselgeräte zum Einbau in Luftfahrzeugen bekannt geworden. Während die mechanischen Kreiselgeräte die Lage des Luftfahrzeugs bezüglich eines künstlichen Horizonts anzeigen weisen elektronische Kreiselgeräte elektrische Ausgangssignale auf. Eine Verwendung dieser Signale zur Regelung einer Wärmebildkamera ist jedoch nicht bekannt geworden. Ein derartiges Kreiselgerät ist auf der Internetseite http://www.baigar.de/electronicslferranti/FH7Z8GearBox.pdf abgebildet und mittels seines Schaltplans charakterisiert.

Der Erfindung liegt deshalb die Aufgabe zugrunde, ein Verfahren anzugeben, welches die Gain- und Offset-Regelung einer Wärmebildkamera dahingehend unterstützt, dass die vorgenannten Nachteile vermieden werden und das Videobild entsprechend optimiert wird.

Die erfindungsgemäße Lösung basiert auf der Erkenntnis, dass ein künstlicher Horizont als Hilfsgröße zur Lageeinstellung des angezeigten Videobildes einer Wärmebildkamera genutzt werden kann. Aus diesem Grund wird vorgeschlagen, dass dasjenige Ausgangssignal eines im Fluggerät montierten Kreiselgeräts, welches die Daten für die Darstellung des künstlichen Horizonts enthält, mittels Transformation an das Koordinatensystem der Wärmebildkamera angepasst und dieser als Eingangssignal zur Verfügung gestellt wird, woraus in der Wärmebildkamera ein auf das Wärmebild bezogener künstlicher Horizont erzeugt wird, mit dessen Hilfe die Lage des angezeigten Teils des Wärmebildes bis zur ausschließlichen Darstellung der unterhalb des künstlichen Horizonts liegenden Szene verschoben wird.

Damit wird sichergestellt, dass der kalte Himmel, also derjenige Bereich des von der Wärmebildkamera aufgenommenen Bildes, der oberhalb des künstlichen Horizonts liegt, im angezeigten Bild nicht mehr berücksichtigt wird. In vorteilhafter Weise wird also der angezeigte Teil des Wärmebildes an der Oberkante vom künstlichen Horizont begrenzt.

Weiterhin wird vorgeschlagen, dass die Nachführung der Lage des angezeigten Teils des Wärmebildes ausschließlich anhand von solchen Bildpunkten erfolgt, die eindeutig unterhalb des künstlichen Horizonts liegen. Damit wird ein unerwünschter Einfluss von Bildpunkten vermieden, die aus dem kalten Bereich der Szene, welcher dem Himmel entspricht, stammen.

Ein Ausführungsbeispiel des erfindungsgemäßen Verfahrens ist in der Zeichnung schematisch vereinfacht dargestellt und wird im Folgenden näher beschrieben. Es zeigen:
- Fig. 1:: die Anzeige eines Wärmebildgerätes nach dem Stand der Technik,
- Fig. 2:: die Anzeige eines Wärmebildgeräts bei Anwendung des erfindungsgemäßen Verfahrens.

Bemannte Fluggeräte sind im Allgemeinen für das Fliegen unter Instrumentenflugbedingungen mit einem Anzeigegerät für einen künstlichen Horizont ausgestattet. Es handelt sich hierbei in der Regel um ein Kreiselinstrument mit einer entsprechenden Anzeige als Ersatz für den natürlichen Horizont. Für die räumliche Orientierung wird ein Flugsymbol in diese Darstellung eingeblendet. Für eine vollständige Orientierung bei Dunkelheit oder schlechter Sicht werden in der Anzeige sowohl die Roll- als auch die Nicklage dargestellt.

Im Fall der Verfolgung eines Zieles haben sowohl der Pilot als auch der Schütze bei Rollbewegungen des Fluggeräts auch stets ein zur Bewegung des Fluggeräts gegenläufig rollendes Sensorbild vor Augen. Eine Nickbewegung des Fluggeräts hat jedoch keinen Einfluss auf die Darstellung. Wird hingegen die Visierlinie aus ihrer Ruhelage nach unten bewegt, so erfährt auch die dargestellte Szene eine entsprechende Nickbewegung nach unten. Bei einer Kombination mit einer gleichzeitig stattfindenden Rollbewegung kann der natürliche Horizont ganz oder zumindest teilweise aus dem dargestellten Bild verschwinden. Unter Berücksichtigung dieser Gegebenheiten kann ein künstlicher Horizont somit als eindeutige Trennlinie zwischen Himmel und Erde aufgefasst werden.

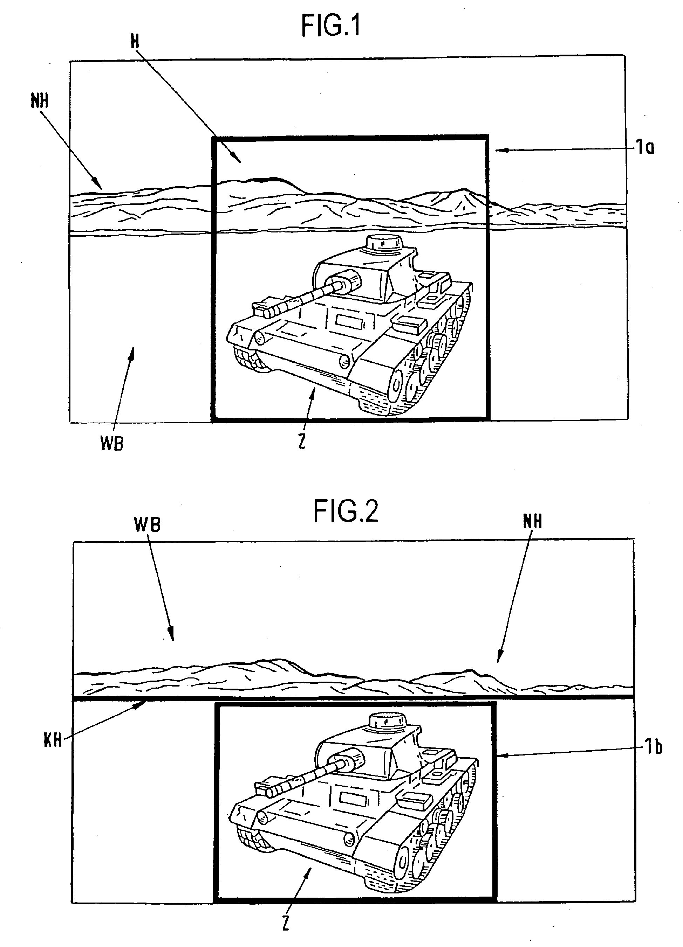

Die Figur 1 zeigt eine solche Szene, wobei in dem Wärmebild WB der Wärmebildkamera neben dem Ziel Z auch der natürliche Horizont NH vereinfacht dargestellt ist. Für die Nachführung des Visiers auf das Ziel Z wird jedoch nur ein Teil 1a des gesamten Wärmebildes WB dargestellt um eine höhere Auflösung des Zieles Z und seiner Umgebung zu erreichen. Dennoch enthält diese Szene auch einen großen Anteil vom Himmel H. Aufgrund der großen Temperaturunterschiede des Himmels und der Umgebung des Zieles Z kommt es zu den weiter oben genannten Problemen der Zielidentifikation.

Hier setzt nun die vorgeschlagene Lösung an, deren Ziel es ist, eine Darstellung wie die aus Figur 2 zu erreichen. Dementsprechend wird vom ohnehin im Fluggerät vorhandenen Kreiselgerät ein Signal entnommen, das der Lage des künstlichen Horizonts entspricht. Dieses im Koordinatensystem des Kreiselgeräts vorliegende Signal wird zunächst auf geeignete Weise in das Koordinatensystem des Wärmebildgeräts transformiert. Die hierfür geeigneten elektronischen Methoden sind bekannt und bedürfen deshalb keiner weiteren Erläuterung.

Die Bereitstellung dieser Daten erfolgt über eine digitale Schnittstelle vom BusSystem des Fluggerätes zu demjenigen des Waffensystems. Dort wird mit Hilfe einer geeigneten Transformation der künstliche Horizont KH in der Form einer Geraden ermittelt. Der Verlauf der Geraden zerlegt das angezeigte Wärmebild WB in zwei Teile. Der für die Darstellung der das Ziel Z umgebenden Szene 1 b verwendete Algorithmus benutzt die Daten dieser Geraden und wählt für seine Regelgrößen nur diejenigen Bildpunkte aus, die eindeutig unterhalb des künstlichen Horizonts liegen. Damit ist sichergestellt, dass für den Nachführungsprozess und die Gain- und Offset-Regelung keine Bildpunkte aus den Bereichen mit niedriger Temperatur verwendet werden. Damit ist eine optimierte automatische Regelung der bildrelevanten Größen sichergestellt, weil nur zielrelevante terrestrische Hintergrundinformationen genutzt werden. Dies hat natürlich auch eine unmittelbare Auswirkung auf das für die Einstellung des Bildes 1b zu ermittelnde Histogramm über die Temperaturverteilung.

Die dem Schützen angezeigte Szene 1b wird somit auf den Bereich unterhalb des künstlichen Horizonts verschoben und enthält damit nur noch Bildpunkte aus einem Temperaturbereich, der demjenigen des Zieles selbst ähnlich ist. Für den Schützen ergibt sich somit eine Darstellung des Zieles und seiner Umgebung ohne die unerwünschte Sättigung.

## Patentansprüche

1. Verfahren zur automatisierten Lagenachregelung der Anzeige einer in einem Fluggerät angeordneten Wärmebildkamera mit Hilfe eines im Fluggerät angeordneten und Signale erzeugenden Kreiselgeräts, **dadurch gekennzeichnet, dass** dasjenige Ausgangssignal des Kreiselgeräts, welches die Daten für die Darstellung des künstlichen Horizonts enthält, mittels Transformation an das Koordinatensystem der auf ein Ziel ausgerichteten Wärmebildkamera angepasst und dieser als Eingangssignal zur Verfügung gestellt wird, woraus in der Wärmebildkamera ein auf das Wärmebild (WB) bezogener künstlicher Horizont (KH) erzeugt wird, mit dessen Hilfe die Lage der das Ziel (Z) umgebenden Szene (1a) des Wärmebildes (WB) bis zur ausschließlichen Darstellung der unterhalb des künstlichen Horizonts (KH) liegenden Szene (1b) verschoben wird.

2. Verfahren nach Anspruch 1, **dadurch gekennzeichnet, dass** der angezeigte Teil des Wärmebildes an der Oberkante vom künstlichen Horizont (KH) begrenzt wird.

3. Verfahren nach Anspruch 1 oder 2, **dadurch gekennzeichnet, dass** die Nachführung der Lage des angezeigten Teils (1a, 1b) des Wärmebildes ausschließlich anhand von solchen Bildpunkten erfolgt, die eindeutig unterhalb des künstlichen Horizonts (KH) liegen.

## Claims

1. Method for automated position readjustment of the display of a thermal imaging camera arranged in an aircraft with the aid of a gyroscope arranged in the aircraft and producing signals, **characterized in that** the output signal of the gyroscope, which includes the data for displaying the artificial horizon, is adapted by means of transformation to the coordinate system of the thermal imaging camera aligned on a target, and made available to said camera as input signal, as a result of which there is produced in the thermal imaging camera an artificial horizon (KH) which is referred to the thermal image (WB) and with the aid of which the position of the scene (1a), surrounding the target (Z), of the thermal image (WB) is shifted as far as the exclusive displaying of the scene (1b) lying below the artificial horizon (KH).

2. Method according to Claim 1, **characterized in that** the displayed portion of the thermal image is bounded at the top edge of the artificial horizon (KH).

3. Method according to Claim 1 or 2, **characterized in that** the tracking of the position of the displayed portion (1a, 1b) of the thermal image is performed exclusively with the aid of such pixels which lie clearly below the artificial horizon (KH).

## Revendications

1. Procédé de régulation fine automatique de la position de l'affichage d'une caméra d'imagerie thermique disposée dans un aéronef, à l'aide d'un appareil gyroscopique disposé dans l'aéronef et délivrant des signaux,
**caractérisé en ce que**
le signal de sortie de l'appareil gyroscopique, qui contient les données représentant un horizon artificiel, sont adaptées par transformation au système de coordonnées de la caméra d'imagerie thermique orientée sur une cible et est délivré à cette dernière comme signal d'entrée à partir duquel un horizon artificiel (KH) relatif à l'image thermique (WB) et à l'aide duquel la position de la scène (la) de l'image thermique (WB) qui entoure la cible (Z) est déplacée jusqu'à représenter exclusivement la scène (1b) située en dessous de l'horizon artificiel (KH) est formé dans la caméra d'imagerie thermique.

2. Procédé selon la revendication 1, **caractérisé en ce que** la partie affichée de l'image thermique est limitée par le bord supérieur de l'horizon artificiel (KH).

3. Procédé selon les revendications 1 ou 2, **caractérisé en ce que** le guidage fin de la position de la partie affichée (1a, 1b) de l'image thermique s'effectue exclusivement à l'aide de points d'image situés de manière univoque en dessous de l'horizon artificiel (KH).
